# EUROPEAN PATENT APPLICATION

(11) **EP 4 819 465 A1**
(43) Date of publication of application: **07.10.2026**
(21) Application number: 25168182.1
(22) Date of filing: 03.04.2025
(51) Int. Cl.: H02M 1/00

(54) **MULTILEVEL VOLTAGE CONVERSION BY A MULTIPLE CONVERTER SYSTEM AND METHOD THEREOF**

(71) Applicant: Tridonic GmbH & Co. KG, 6851 Dornbirn (AT); Photeon Technologies GmbH, 6850 Dornbirn (AT)
(72) Inventor: Lochmann, Frank, 6851 Dornbirn (AT); Behrle, Raphael, 6851 Dornbirn (AT); Wild, Emanuel, 6851 Dornbirn (AT); Saccavini, Lukas, 6851 Dornbirn (AT); Vonach, Christoph, 6851 Dornbirn (AT); Schneider, Miguel Philipp, 6851 Dornbirn (AT); Cappelletti, Andrea, 6850 Dornbirn (AT); Mitterbacher, Andre, 6850 Dornbirn (AT); Schneider, Andreas, 6850 Dornbirn (AT)
(74) Representative: Rupp, Christian

(57) **Abstract**

The invention is related to a system for converting an input voltage into an output voltage by using multiple converter stages, comprising a first converter 1 that is configured to convert the input voltage to an intermediate voltage; and a second converter 2 that is configured to convert the intermediate voltage into the output voltage and to communicate information to a first converter 1; wherein the first converter 1 is configured to set at least one operational parameter of the first converter 1 to a target value based on the received information, such that the first converter 1 converts the input voltage into the intermediate voltage based on the at least one operational parameter.

## Description

The invention refers to multilevel voltage conversion by a multiple stage converter system and method thereof.

Converters are widely used to regulate electrical power in various systems, especially in the field of power electronics. In particular, such converters provide a required voltage level. Modern electronic systems consist of rather complex structures of power devices that have rapidly changing power requirements. For ensuring the power that is required by modem devices, multilevel converters are commonly used.

By establishing two converter stages, sophisticated power distribution architectures may be realized. A well-known architecture is the intermediate bus architecture (IBA) that uses an intermediate bus converter as a primary converter. The intermediate bus converter (IBC) converts a voltage of the power supply, like 50 V, into an intermediate voltage of e.g. 1.8 V. In consequence, the intermediate bus provides the intermediate voltage to all connected components. For any component, there may be connected a second converter, e.g. an integrated voltage regulator (IVR), which converts the intermediate voltage into the desired voltage of the corresponding component. Such a component may be a CPU, GPU or the like. Such an IBA is commonly used for several reasons like increased functionality, reduced cost and size, improved efficiency and the like.

Without any loss of generality, in the following the primary converter is denoted as IBC, whereas the secondary converter is denoted as IVR.

A major drawback of these two (or even more) converter stages is given by the fact that the IBC is generally slower than the IVR when it comes to react to fluctuating voltage demands by the components. This is, when the IVR adapts on changed voltage demands, the IBC must also adapt its operational parameters to ensure that the intermediate voltage is held constantly. However, as the IVR adapts much faster to changing voltage demands of the components (commonly by a factor 40), the delay of the IBC causes a rippling intermediate voltage, which is highly undesired.

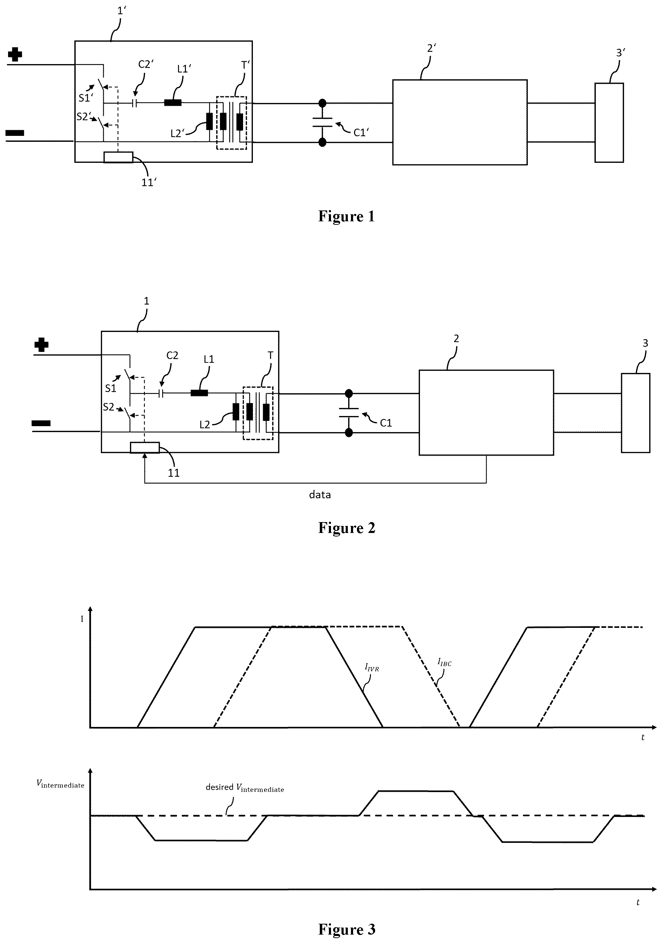

A known solution of this problem is to connect a high-capacitive element between the IBC and IVR as shown in Figure 1. The capacitive element stores electrical energy and mitigates the effects of rippling of the intermediate voltage.

In addition, the IBC comprises a control circuit that reacts to changes of the capacitive element via a feedback control architecture, such that the IBC can react to maintain the intermediate voltage.

Nevertheless, the charging and discharging of the capacitive element is a rather slow process, such that the feedback control architecture still performs poor in terms of maintaining the intermediate voltage precisely in certain circumstances.

In order to overcome the above mentioned objective technical problems, the present invention provides a system and a method for converting an input voltage into an output voltage by using multiple converter stages according to the enclosed independent claims. The invention is defined in the appended claims. Advantageous aspects and features of the present invention are defined in the corresponding dependent claims.

A system for converting an input voltage into an output voltage by using multiple converter stages, comprises a first converter that is configured to convert the input voltage into an intermediate voltage; and a second converter that is configured to convert the intermediate voltage into the output voltage and to communicate information to a first converter. Moreover, the first converter is configured to set at least one internal operational parameter of the first converter to target values based on the received information, such that the first converter converts the input voltage into the intermediate voltage based on the at least one operational parameter.

The input voltage may be a voltage that is provided by a power supply. For instance, the input voltage is 50V, yet any voltage value is valid.

The intermediate voltage is the voltage value provided after conversion of the input voltage by the first converter. For instance, the intermediate voltage is 1.8 V, yet any voltage different from this voltage is valid.

The output voltage is the voltage value that is provided after conversion of the intermediate voltage by the second converter. For instance, the output voltage is 0.6 V, yet any voltage different from the input and intermediate voltage is valid.

The first converter may be any electrical circuit that is capable of converting the input voltage into the intermediate voltage. For instance, the first converter is a DC-DC converter, especially an IBC. Alternatively, the first converter may be any kind of a buck converter, a boost converter, a buck-boost converter or a charge pump or the like. Specific alternatives may be phase-shifted full-bridge converters, LLC resonant converters, half-bridge converters or the like.

The second converter may be any electrical circuit that is capable of converting the intermediate voltage into the output voltage. For instance, the second converter is a DC-DC converter, especially an IVR. Alternatively, the second converter may be any kind of a buck converter, a boost converter, a buck-boost converter or a charge pump or the like. Specific alternatives may be hybrid voltage regulators (HVR), on-chip buck converters, point-of-load (PoL) converters, or the like.

Additionally, it may be provided a converter that combines the features of the first and second converter as described in the disclosure. In particular, by that, a multilevel system comprising more than two voltage conversion stages can also provide the advantages of the present invention.

The first and second converters are connected to each other for realizing the multilevel conversion.

The connections may be any kind of wired electrical connection. For instance, the connection is a wired bus. Additionally the wired bus may be comprised in an IBA.

Operational parameters of the first converters are those that define the operational characteristic of the first converter. In addition, the parameters must be adjustable. For instance, in case of a switch-based converter, the switching frequency of the switch is an adjustable operational parameter. Contrary, the number of windings of an inductance is generally not adjustable, although being a relevant parameter for the operation.

The received information may conveyed in an analog or digital signal. The information may be provided by a carrier signal. For instance, the information can be provided via a PWM signal. However, the carrier signal may be arbitrarily chosen based on the specific requirements.

It should be understood that the communicated information enables the first converter to set at least one operational parameter, such that the first operator operates as intended based on this parameter. For instance, it is intended to maintain the intermediate voltage by the first converter at a specific voltage level, e.g. in architectures like the IBA. Thus, when mentioning intermediate voltage within this disclosure, a specific voltage level is meant. However, this is generally not the case for feedback control based approaches, as those would not be able to maintain the intermediate voltage precisely in some circumstances, e.g. when a state of the second converter has experienced a rather large change. As a result, state of the art approaches would not convert the input voltage correctly into the intermediate voltage under some circumstances.

An advantageous effect of the foregoing embodiment is that the communicated information enables the first converter to directly react to changing requirements and to convert the input voltage into the intermediate voltage. By "directly", it is meant that by setting the operational parameters as required, the first converter directly reached its targeted behavior. Contrary, in the state of the art, the first converter would have to rather slowly approach a state using its control algorithm, in which it converts the input voltage into the intermediate voltage. This is especially a major drawback, when rapid changes occur by the second converter.

**In** an embodiment, the second converter is configured to communicate the information in response to an identification of a necessary change of state of the second converter.

The identification is generally related to an identification of a changed power demand by a load that is connected to the second converter. The identification is performed before the state of the second converter has changed. The identification may be performed by interaction of the second converter with the load connected to the second converter. For instance, the second converter determines that the power demand of the connected load will change based on a communication of the second converter with the load.

It should be noted that the change of the state of the second converter is a direct consequence of a changed power demand of the load.

It should be noted that the load is generally the component to which the voltage conversion is related.

Alternatively or additionally, the identification is performed when or after the state of the second converter has changed. For consideration of a time horizon after the change has occurred, it should be compared the required time of state of the art approaches, such that the time horizon does not exceed the required time of the state of the art approach to ensure a faster adjustment of the first converter. For instance, in case of IBC's a time horizon of a few nanoseconds would be sufficient.

An advantageous effect of the foregoing embodiment is that the information is communicated before the change of the second converter has occurred, such that the time for the first converter to react to such changes is reduced.

In an embodiment, the change of the state of the second converter is a change of load characteristic of the second converter and/or a change of the output voltage.

An advantageous effect of the foregoing embodiment is that the change is based on well measurable characteristics.

In an embodiment, the first converter comprises a control circuit that is configured to adjust the at least one operational parameter of the first converter through a feedback control in order to maintain the intermediate voltage.

The control circuit could be particularly realized as a Central Processing Unit (CPU), a Graphics Processing Unit (GPU), a Field Programmable Gate Array (FPGA), an Application-Specific Integrated Circuit (ASIC), a Digital Signal Processor (DSP) or a Microcontroller (MCU).

An advantageous effect of the foregoing embodiment is that when the first converter performs as intended by converting the input voltage into the intermediate voltage, the control circuit ensures to maintain the intermediate voltage by a feedback control loop. Thus, the first converter performs as intended as long as no major changes of the second converter occur.

In an embodiment, the first converter maintains the at least one operational parameter for a predetermined time after the operational parameter is set to the target value.

An advantageous effect of the foregoing embodiment is that the first converter performs as intended for a predetermined time without requiring additional control methods.

In an embodiment, the first converter comprises at least one switch that is used for the voltage conversion; and the first converter is configured to determine a switching frequency as a target value based on the communicated information, and to set the determined switching frequency as the switching frequency of the at least one switch.

The switch may particularly be realized as a solid state semiconductor switch. For instance, the switch may be a bipolar junction transistor switches, metal-oxide-semiconductor field-effect transistors (MOSFETs), insulated gate bipolar transistors (IGBTs), or the like.

An advantageous effect of the foregoing embodiment is that for switch-based voltage converters, the switching frequency is adjusted based on the communicated information, which yields to a simple control method.

In an embodiment, the first converter comprises a storage; and the storage is configured to store a mapping algorithm that maps at least part of the communicated information to a frequency, and the first converter is configured to determine the switching frequency of the at least one switch based on the mapping.

The storage may be any device for storing information electrically. In particular, the storage 15 may be realized as a flash memory, a Random Access Memory (RAM), a Read-Only Memory (ROM), a Hard Disk Drive (HDD), hybrid drives, Non-Volatile RAM (NVRAM) or cloud storage.

Alternatively or additionally, the mapping algorithm maps at least part of the communicated information to all or at least part of the operational parameters, and the first converter is configured to determine said operational parameters based on the mapping.

Alternatively, the storage is an external storage and is accessible via an arbitrary communication interface.

An advantageous effect of the foregoing embodiment is that the communicated information is directly mappable on a switching frequency via said mapping algorithm.

In an embodiment, the mapping algorithm is a look-up table or a calculation method.

The look-up table may be realized as a database which stores at least part of the communicated information and switching frequencies. In addition, the stored communicated information is linked to one switching frequency. However, a certain value of a switching frequency may also be linked to another stored communicated information. By stored communicated information it is meant that the stored communicated information may somehow be related to the communicated information by the second converter such that a mapping may be achieved. Thus the stored communicated information must not be communicated by any device.

Alternatively or additionally, the calculation method may be stored in the storage.

An advantageous effect of the foregoing embodiment is that the mapping algorithm may be simply established via a look-up table or a calculation method.

A method for converting an input voltage into an output voltage by using multiple converter stages comprises the step of converting, by a second converter, an intermediate voltage into the output voltage. In addition the method comprises the step of communicating, by the second converter, information to a first converter. In addition the method comprises the step of setting, by the first converter, at least one operational parameter of the first converter to a target value based on the received information. In addition the method comprises the step of converting, by the first converter, the input voltage into the intermediate voltage based on the at least one operational parameter.

The advantageous effect of the first embodiment of the system apply accordingly to the method.

In the following, preferred embodiments of the present application shall be described in more detail based on the corresponding figures.
- Figure 1: is a schematic view of a two level voltage conversion system of the state of the art.
- Figure 2: is a schematic view of a two level voltage conversion system according to an embodiment.
- Figure 3: is a schematic view of electrical characteristics of the state of the art.
- Figure 4: is a schematic view of electrical characteristics according to the embodiment.
- Figure 5: is a flowchart of a first method.

Figure 1 is a schematic view of a two level voltage conversion system of the state of the art. The system comprises a first converter 1', a second converter 2', a load 3' and a capacitor C1'.

The first converter 1' is an LLC converter. The LLC converter comprises a first switch S1', a second switch S2', a capacitor C2', a first inductance L1', a second inductance L2' and a transformer T.

The first converter also comprises a control circuit 11'. The control circuit 11' is a CPU. The control circuit 11' is built as a feedback controller.

Generally, the gain of the first converter 1' is dependent on the required power of the load 1'. However, the gain can be adjusted by setting a switching frequency of the switches S1' and S2'.

The capacity of the capacitor C1' is provided as an input to the control circuit 11' based on which the control circuit 11' determines a switching frequency for the switches S1' and S2'. The switches are respectively turned on and off by the control circuit 11' with a periodicity defined by the switching frequency. In this particular embodiment of a LLC converter, switch S1' is turned on when switch S2' is turned off and vice versa. Consequently, a square wave signal is provided to the remaining circuit of the LLC converter.

The capacitor C2', the first inductance L1', the second inductance L2' and the transformer T' are responsible for the switching frequency dependent voltage conversion.

The second converter 2' is an IVR.

The load 3' is a GPU. However, the load 3' could also be a CPU or the like.

The capacitor C1' has high capacity.

A certain example of the interaction between the components of the illustrated system is provided in the following.

The general working principle of the two-level converter is realized by a first converter stage and a second converter stage.

The first converter 1', building the first converter stage, converts an input voltage into an intermediate voltage. The input voltage is the left-sided voltage of the first converter 1', whereas the intermediate voltage is the right sided voltage of the first converter 1'.

The second converter 2', building the second converter stage, converts the intermediate voltage into an output voltage that is provided to the load 3'.

When the system is operated without any changes, the first converter 1' performs well by providing the required intermediate voltage. In particular, by using the feedback control of the control circuit 11', the performance is sufficient.

However, in case the load 3' changes its demanded power by a rather large amount, the first converter 1' performs rather poorly as shown in figure 3.

Figure 3 is a schematic view of electrical characteristics of the state of the art.

The upper graphic of figure 3 shows the provided current of the first converter 1' (see *I*_{IBC}) and second converter 2' (see *I*_{IVR}). In particular, when a change of the demanded power occurs by the load 3', the provided current of the second converter 2' increases rapidly to ensure supply of the demanded power. However, the first converter 1' increases its current to supply the provided power with a certain time delay, as visible by the displacement of both curves. The delay is caused by the rather slow feedback loop of control circuit 11', which takes the rather slowly changing capacity of C1' as an input for the feedback control.

In consequence, the resulting intermediate voltage provided by the first converter 1' does not provide the desired intermediate voltage over the entire time period as shown in the lower graphic of figure 3. In contrary, the resulting intermediate voltage shows a voltage ripple.

The capacitor C1' is able to mitigate the effect of the voltage ripple to a certain amount, yet in general this is not sufficient.

It should be noted figure 1 merely states a schematic view. In particular, some relevant circuit elements have not been illustrated for the sake of readability. For example, the power supply providing the input voltage to the first converter 1' has not been illustrated. Moreover, rectifiers at the output of the transformer were not illustrated. However, it is explicitly stated that common relevant circuit elements are included, which are not explicitly illustrated.

Figure 2 is a schematic view of a two level voltage conversion system according to an embodiment. The system comprises a first converter 1, a second converter 2, a load 3 and a capacitor C1.

The first converter 1 is an LLC converter. The LLC converter comprises a first switch S1, a second switch S2, a capacitor C2, a first inductance L1, a second inductance L2 and a transformer T.

The switches S1 and S2 are solid state semiconductor switches.

Generally, the gain of the first converter 1 is dependent on the required power of the load 1. However, the gain can be adjusted by setting a switching frequency of the switches S1 and S2.

The capacitor C2, the first inductance L1, the second inductance L2 and the transformer T are responsible for the switching frequency dependent voltage conversion.

The second converter 2 is an IVR.

The load 3 is a GPU. However, the load 3 could also be a CPU or the like.

The capacitor C1 has high capacity.

A certain example of the interaction between the components of the illustrated system is provided in the following.

The general working principle of the two-level converter is realized by a first converter stage and a second converter stage.

The first converter 1, building the first converter stage, converts an input voltage into an intermediate voltage. The input voltage is the left-sided voltage of the first converter 1, whereas the intermediate voltage is the right sided voltage of the first converter 1.

The second converter 2, building the second converter stage, converts the intermediate voltage to an output voltage that is provided to the load 3.

When the system is operated without any changes, the first converter 1 performs well by providing the required intermediate voltage.

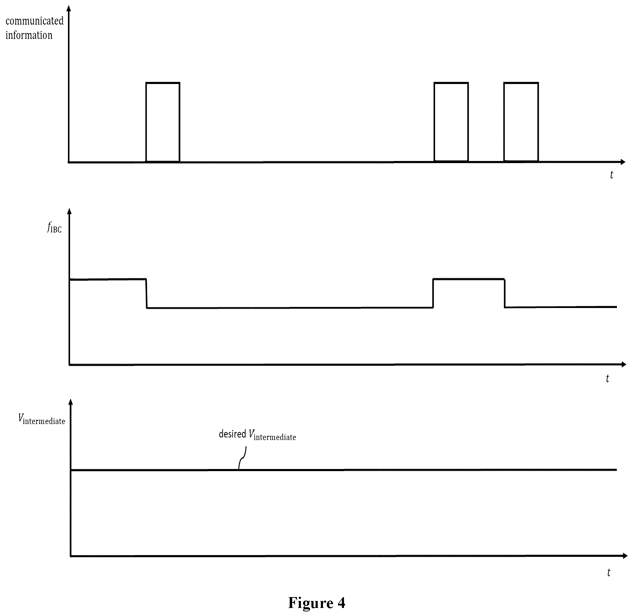

In case the load 3 changes its demanded power by a rather large amount, the first converter 1 performs well as shown in figure 4.

This is achieved by communicating information, by the second converter 2, to the first converter 1. Figure 2 illustrates the communicated information via the data arrow. The communicated information is provided to the control circuit 11 based on which the switching frequency of the switches S1 and S2 is adjusted to the desired target value.

The first converter 1 and second converter 2 comprise communication interfaces for communicating this information, which are not illustrated in figure 2. The communication interface can be wired or wireless.

Preferably, the second converter 2 communicates the information to the first converter 1 before the change of the state of the second converter 2 has occurred.

Preferably, the second converter 2 is configured to communicate the information in response to an identification of a necessary change of state of the second converter.

The change of the state may comprise the load characteristic of the second converter 2 as seen by the first converter 1 and/or the output voltage of the second converter 2. Any value may be the value that is imminent or that has already occurred.

The identification may be provided through interaction of the second converter 2 with the load 3. For instance, the load 3 may communicate an imminent change of power demand to the second converter 2.

The effects of communicating the information to the first converter 1 are explained with reference to figure 4.

Figure 4 is a schematic view of electrical characteristics according to the embodiment.

The communicated information by the second converter 2 to the first converter 1 are illustrated in the upper graphic. Hence, the information is a square wave signal (e.g. PWM signal).

When this information is provided to the first converter 1 and its control circuit 11, the switching frequency of the switches S1 and S2 is adjusted according to the middle graphic.

As a result, the intermediate voltage corresponds to the desired intermediate voltage as shown in the lower graphic.

In contrary to the illustration in figure 4, the information may be a square wave signal with varying amplitude, whereas each amplitude corresponds to a certain frequency. Alternatively, the frequency of a PWM signals may be related to a certain switching frequency. Alternatively, digital information may be provided that is related to a certain switching frequency.

The control circuit 11 comprises an internal storage that relates at least part of the communicated information to a certain switching frequency. For instance, some of the communicated information is merely provided to establish a secure communication.

Alternatively, the first converter 1 may provide a communication interface, which could be the same as for communication with the second converter 2, to communicate with an external storage that relates at least part of the communicated information to a certain switching frequency.

Alternatively, the second converter 2 or any device, like the external storage or the load 3, that communicate with the second converter 2 may communicate the information or the desired operational parameters to the first converter 1. Thus, those devices may also determine the operational parameters, like the switching frequency, internally, such that the first converter 1 must only apply the operational parameters.

Additionally, the control circuit 11 of the first converter 1 operates similarly to the control circuit 11' by providing said feedback control method. Preferably, the feedback control is provided after the switching frequency has been set based on the communicated information as described before.

In particular, setting the operational parameters based on the communicated information is prioritized compared to any additional control method.

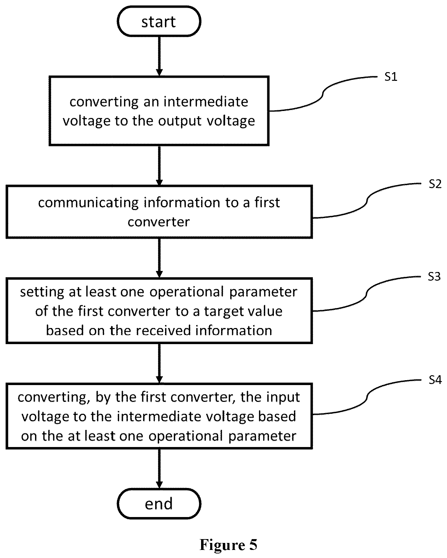

Figure 5 is a flowchart of a first method.

It is shown a step S1 for converting an intermediate voltage to the output voltage.

It is shown a step S2 for communicating information to a first converter.

It is shown a step S3 for setting at least one operational parameter of the first converter to a target value based on the received information.

It is shown a step S4 for converting, by the first converter, the input voltage into the intermediate voltage based on the at least one operational parameter.

For the steps S1 and S2 it is referred to the detailed description above of the second converter 2 which completely describes the functionality of the indicated steps S1 and S2 in its entirety. It should be noted that the indicated steps are independent of the executing device.

For the steps S3 and S4 it is referred to the detailed description above of the first converter 2 which completely describes the functionality of the indicated steps S3 and S4 in its entirety. It should be noted that the indicated steps are independent of the executing device.

## Claims

1. A system for converting an input voltage into an output voltage by using multiple converter stages, comprising:
a first converter (1) that is configured to convert the input voltage into an intermediate voltage; and
a second converter (2) that is configured to convert the intermediate voltage to the output voltage and to communicate information to a first converter (1); wherein
the first converter (1) is configured to set at least one operational parameter of the first converter (1) to a target value based on the received information, such that the first converter (1) converts the input voltage to the intermediate voltage based on the at least one operational parameter.

2. A system according to claim 1, wherein
the second converter (2) is configured to communicate the information in response to an identification of a necessary change of state of the second converter (2).

3. A system according to claim 2, wherein
the change of the state of the second converter (2) is a change of a load characteristic of the second converter (2) and/or a change of the output voltage.

4. A system according to any of the preceding claims, wherein
the first converter (1) comprises a control circuit (11) that is configured to adjust the at least one operational parameter of the first converter (1) through a feedback control in order to maintain the intermediate voltage.

5. A system according to any of the preceding claims, wherein
the first converter (1) maintains the at least one operational parameter for a predetermined time after the operational parameter is set to the target value.

6. A system according to any of the preceding claims, wherein
the first converter (1) comprises at least one switch that is used for the voltage conversion; and
the first converter (1) is configured to determine a switching frequency as a target value based on the communicated information, and to set the determined switching frequency as the switching frequency of the at least one switch.

7. A system according to claim 6, wherein
the first converter (1) comprises a storage; and
the storage is configured to store a mapping algorithm that maps at least part of the communicated information to a frequency, and the first converter (1) is configured to determine the switching frequency of the at least one switch based on the mapping.

8. A system according to claim 7, wherein
the mapping algorithm is a look-up table or a calculation method.

9. A method for converting an input voltage into an output voltage by using multiple converter stages comprising the steps of:
converting (S1), by a second converter (2), an intermediate voltage into the output voltage; and
communicating (S2), by the second converter (2), information to a first converter (1); and
setting (S3), by the first converter (1), at least one operational parameter of the first converter (1) to a target value based on the received information; and
converting (S4), by the first converter (1), the input voltage to the intermediate voltage based on the at least one operational parameter.
